# EUROPÄISCHE PATENTSCHRIFT

(11) **EP 3 378 624 B1**
(45) Veröffentlichungstag und Bekanntmachung des Hinweises auf die Patenterteilung: **06.10.2021**
(21) Anmeldenummer: 18163451.0
(22) Anmeldetag: 22.03.2018
(51) Int. Cl.: B29C 48/25, B29C 48/41, F16D 1/10, B29B 7/48, F16D 3/06, B30B 15/12

(54) **SICHERHEITSKUPPLUNG FÜR EINEN DOPPELSCHNECKENEXTRUDER**
OVERLOAD COUPLING FOR A DOUBLE SCREW EXTRUDER
COUPLAGE DE SURCHARGE POUR UNE EXTRUDEUSE À DOUBLE VIS

(30) Priorität: 24.03.2017 DE 102017106454
(43) Veröffentlichungstag der Anmeldung: 26.09.2018
(73) Patentinhaber: Veka AG, 48324 Sendenhorst (DE)
(72) Erfinder: Schuler, Werner, 48351 Everswinkel (DE)
(74) Vertreter: Tarvenkorn, Oliver

(56) Entgegenhaltungen:
- EP-A1- 0 132 525
- EP-A1- 2 048 394
- WO-A1-2016/022114

## Beschreibung

Die Erfindung bezieht sich auf eine Sicherheitskupplung für einen Doppelschneckenextruder mit den Merkmalen des Oberbegriffs des Anspruchs 1.

In der DE 20 2014 102 449 U1 wird das Problem bei einem Doppelschneckenextruder beschrieben, das auch der Erfindung zugrunde liegt: In einem Doppelschneckenextruder wird ein insbesondere korn- beziehungsweise pulverförmiges Kunststoffmaterial, insbesondere PVC-Pulver, mittels zweier gegenläufig rotierender und ineinander kämmender Schneckenwellen durch einen beheizten Zylinder gefördert und dabei aufgeschmolzen. Bei einer Blockade einer oder beider Schneckenwellen wirkt das gesamte Drehmoment des Antriebs auf die beiden Getriebe, die der Drehzahlreduzierung und der Verteilung des Drehmoments auf zwei Abtriebswellen dienen. Hierbei kann eine Welle des Verteilgetriebes deutlich überlastet werden. Die aus einer Überlastung resultierenden Beschädigungen des Getriebes sind sehr kostspielig und führen zu langem Produktionsstillstand. Zur Lösung des Problems ist eine Sicherheitskupplung, die die Wellenenden miteinander verbindet, wobei die Kupplung aus zwei Kupplungshalbelementen bestehen, die wiederum über Scherstifte, welche parallel zur Mittelachse der Welle verlaufen, verbunden sind. Da das Antriebsdrehmoment exakt in der Trennebene zwischen den Kupplungshalbelementen übertragen wird, kann die Scherspannung pro Scherstift gut berechnet werden.

Der Nachteil der bekannten Lösung liegt jedoch daran, dass die Sicherheitskupplungen aufgrund des erhöhten Platzbedarfs durch die am Außenumfang positionierten Scherstiftelemente bei erhöhten Drehmomenten nicht nebeneinander angeordnet werden können. Der Achsabstand der beiden Antriebswellen und der darüber anzutreibenden Extruderschnecken ist durch die Schneckengeometrie fest vorgegeben und kann nicht beliebig vergrößert werden, um die Sicherheitskupplungen nebeneinander anordnen zu können. Daher kann nur eine versetzte Anordnung der Sicherheitskupplungen erfolgen, wozu die Enden der Extruderschnecken und/oder die Enden der Antriebswellen des Getriebes unterschiedlich lang ausgebildet sein müssen. Um den axialen Versatz bei parallel angeordneten Getriebeantriebswellen auszugleichen, ist es erforderlich, Zwischenwellen vorzusehen und diese über weitere Kupplungen anzuschließen. Die zusätzlichen Kupplungen und die Ausgleichswellen erhöhen die Kosten und den Platzbedarf der Extrusionsanlage.

In der WO 2010/109 486 A1 wird eine Lösung zur Begrenzung des zulässigen Drehmoments bei einer Extruderschnecke, insbesondere bei einem Doppelschneckenextruder, vorgestellt, wonach Zwischenwellen vorgesehen sind, die selber als Scherelement ausgebildet sein sollen. Diese Lösung hat jedoch den Nachteil, dass immer noch die recht aufwendig zu fertigenden Zwischenwellen benötigt werden und dass bei der an einer Einschnürung in der Zwischenwelle gebildeten Sollbruchstelle mehrachsige Spannungszustände auftreten können, die nicht so präzise berechenbar sind wie bei einem zylindrischen Scherstiftelement, so dass auch das auslösende Drehmoment nicht hinreichend sicher bestimmbar ist.

EP 2 048 394 A1 beschreibt einen Kupplungssatz zum Ausgleich von Fluchtungsfehlern zwischen einer Antriebswelle und einem Knetelement wie einer Schneckenwelle. Es sind zwei Kupplungshalbelemente vorgesehen, die jeweils mit einem Ende der zu verbindenden Wellen verbunden werden. Sie werden über ein massives Mittelteil miteinander verbunden, das an beide Kupplungshalbelemente angeschraubt ist. Es besteht somit eine reibschlüssige Verbindung, für die ein Versagensdrehmoment nicht ausreichend präzise berechnet werden kann. Damit ist der Kupplungssatz als Sicherheitskupplung nicht geeignet. Weitere Kupplungshülsen für Doppelschneckenextruder sind in EP 0 132 525 A1 beschrieben.

Die Aufgabe der vorliegenden Erfindung besteht somit darin, eine Sicherheitskupplung der eingangs genannten Art so zu verbessern, dass eine Anordnung in einem Doppelschneckenextruder ohne axialen Versatz und ohne Ausgleichswellen möglich ist.

Gemäß der vorliegenden Erfindung wird die genannte Aufgabe durch eine Sicherheitskupplung mit den Merkmalen des Anspruchs 1 gelöst, nämlich insbesondere dadurch, dass die Kupplungshalbelemente jeweils eine flanschlose, zylindrische Hülle besitzen und dass die Scherelemente in den Stirnseiten der Kupplungshalbelemente und damit auch vor den Stirnseiten der jeweiligen Wellenenden angeordnet sind. Die Scherelemente werden also im Querschnitt der Hüllen angeordnet, ohne dass es einen radialen Überstand gibt. Damit ist eine schlanke Bauweise möglich, die die Anordnung von zwei Sicherheitskupplungen direkt nebeneinander, ohne axialen Versatz, ermöglicht.

Die zylindrischen Hüllen der Kupplungshalbelemente können in ihrem Durchmesser so breit ausgebildet werden, dass sie sich bei zwei in einem Doppelschneckenxtruder nebeneinander positionierten Sicherheitskupplungen nicht berühren. In jedem Fall ist die Wandstärke der zylindrischen Hülle ausreichend, um die Antriebsdrehmomente in den Bodenbereich des Kupplungshalbelements und darüber in die Scherelemente überzuleiten. Die Scherelemente werden sehr präzise nur in einer Trennebene zwischen den Kupplungshalbelementen, welche senkrecht zur Rotations- und Mittelachse der Antriebswellen und der Extruderschnecke verläuft, und nur auf Schub belastet. Durch präzise Positionierung der zugehörigen Bohrungen sowie durch Wahl von Passungen zwischen den Scherstiften und den Bohrungen wird eine praktisch spielfreie Verbindung hergestellt. Alle Scherelemente, von denen erfindungsgemäß wenigstens zwei vorgesehen sind, werden somit exakt gleichzeitig und gleichartig belastet.

Vorzugsweise sind die Scherelemente als zylindrische Scherstiftelemente ausgebildet.

Die Anzahl der Scherstiftelemente kann von zwei ausgehend erhöht werden. Über eine größere Anzahl von Scherstiftelementen ist es möglich, ein hohes Drehmoment zu übertragen, ohne bei dem einzelnen Scherstiftelement einen zu großen Durchmesser vorsehen zu müssen. Bevorzugt werden zwischen zwei und vier Scherstiftelemente vorgesehen, wodurch die zur Verfügung stehende Fläche an den Stirnseiten der Kupplungshalbelemente gut genutzt ist.

Die Bohrungen aller Scherstiftelemente können auf den Stirnseiten der Kupplungshalbelemente auf einem gemeinsamen Teilkreis angeordnet sein. Damit wird eine exakt symmetrische Belastung jedes Kupplungshalbelements erreicht, insbesondere dann, wenn die Bohrungen weiterhin vorzugsweise in einer gleichmäßigen Winkelteilung auf den Stirnseiten angeordnet sind.

Bei einer bevorzugten Ausführungsform der Erfindung ist zudem vorgesehen, dass die Scherstiftelemente zumindest in einem der Kupplungshalbelemente axial festlegbar sind. Zusätzliche Formschlussmittel sind vorgesehen, um eine axiale Festlegung der Scherstiftelemente in den Kupplungshalbelementen zu erreichen. Der Formschluss kann beispielsweise durch wenigstens eine Nut am Scherstiftelement gebildet sein, in die ein von der Außenseite des Kupplungshalbelements eingebrachtes Sicherungselement eingreift. Hierzu kann beispielsweise ein Gewindestift, eine sogenannte Madenschraube, in eine Gewindebohrung in der Hülle eingesetzt werden, welche genau im Bereich der Nut des Scherstiftelements endet.

Wenn nicht nur an einem Ende eine Sicherung vorgesehen ist, sondern wenn an beiden Kupplungshalbelementen Nuten sowie zusätzliche Sicherungsmittel vorgesehen sind, dann sind die Scherstiftelemente nicht nur gegen Herausfallen bei der Montage gesichert. In diesem Fall sind nämlich auch die beiden Kupplungshalbelemente direkt miteinander verbunden. Außerdem sind bevorzugt zusätzlich noch weitere Formschlussmittel an den Kupplungshalbelementen vorgesehen, um eine Verbindung zu den Wellenenden herzustellen. Hierdurch wird eine sogenannte Vorlaufsicherung gebildet, die die Extruderschnecke an die Antriebswelle anhängt und verhindert, dass sich eine der Extruderschnecken in der Extruderbohrung axial nach vorn bewegen kann.

Um die Montage weiter zu vereinfachen und/oder eine korrekte Montage sicherzustellen, kann noch vorgesehen sein, über die Trennebene hinweg weitere Formschlusselemente ineinander eingreifen zu lassen. Ein Vorsprung an dem einen Kupplungshalbelement kann in einen Rücksprung an dem jeweils anderen eingreifen. Wenn diese zusätzlichen Vor- und Rücksprünge jeweils nur einmal vorhanden sind oder wenn sie - bei mehreren Vor- und Rücksprüngen - eben nicht in gleichmäßiger Teilung auf demselben Teilkreis angeordnet sind, ergibt sich eine eindeutige Zuordnung der Winkellage der beiden Kupplungshalbelemente zueinander bei der Montage.

Nur bei winkelrichtiger Montage wird die vorausberechnete Plastifizier- und Förderleistung der paarweise angeordneten Extruderschnecken in einem Doppelschneckenextruder erzielt. Zusätzlich sollte daher auch in den jeweiligen Wellenaufnahmebuchsen ein zusätzliches Element vorgesehen sein, das in eine entsprechende Ausnehmung am Wellenende eingreift bzw. umgekehrt, sodass auch die Winkellage jedes Kupplungshalbelements in Bezug auf die zugehörige Welle festgelegt ist.

Das Erzwingen einer bestimmten Winkelstellung der Kupplungshalbelemente zueinander kann auch durch Zusatzscherstifte erreicht werden, die in eine entsprechende Ausnehmung an dem jeweils axial gegenüberliegenden Kupplungshalbelement eingreifen. Dabei ist vorgesehen, dass die Aufnahme für den Zusatzscherstift ein größeres Spiel aufweist als bei den der Drehmomentbegrenzung dienenden Scherstiftelementen und/oder dass der Zusatzscherstift gegebenenfalls aus einem weniger belastbaren Werkstoff gebildet ist. Beim Zusatzscherstift sollte eine deutlich reduzierte Scherfestigkeit gewählt werden, beispielsweise von mindestens 80%, so dass auf jeden Fall das durch die Sicherheitskupplung übertragbare maximale Drehmoment nicht durch den nur zu Positionierungszwecken dienenden Zusatzscherstift verfälscht wird.

Weitere Variationen sind über den Durchmesser möglich. Damit wird der Zusatzscherstift nicht gleichzeitig mit den Hauptscherstiftelementen belastet. Aufgrund des größeren Spiels kommt er erst dann zur Anlage, wenn die anderen Scherstiftelemente bereits gebrochen sind, und er blockiert die bereits ausgelöste Sicherheitskupplung aufgrund seiner bewusst schwachen Auslegung nicht.

Die Erfindung wird nachfolgend mit Bezug auf das in den Zeichnungen dargestellte Ausführungsbeispiel näher erläutert. Die Figuren zeigen:
- Figur 1: Teile eines Doppelschneckenextruders mit erfindungsgemäßen Sicherheitskupplungen in Explosionsdarstellung und
- Figur 2: Teile eines Doppelschneckenextruders mit erfindungsgemäßen Sicherheitskupplungen in Schnittansicht von oben.

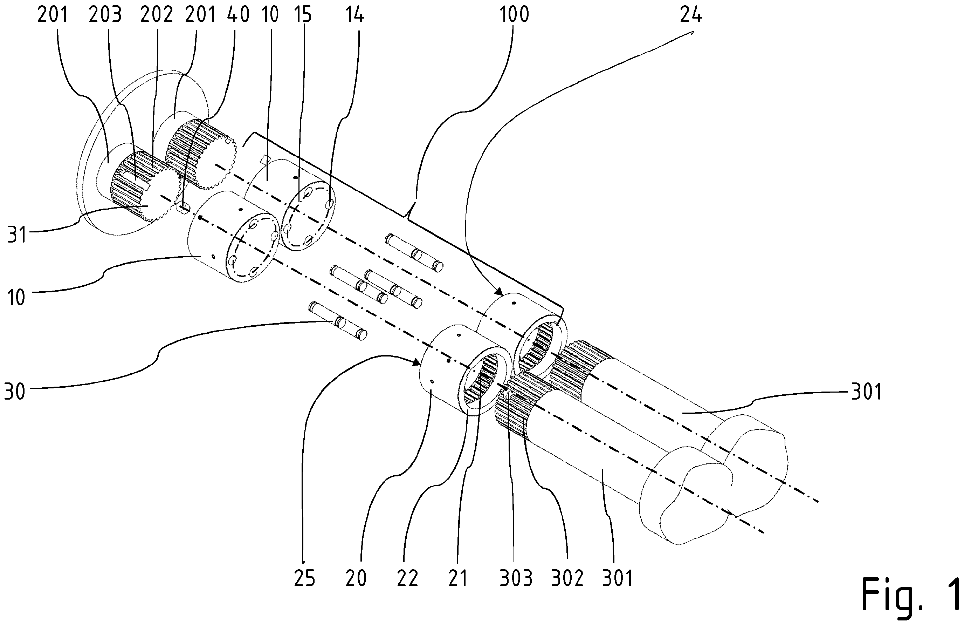

In Figur 1 sind im vorderen, rechten Bereich zwei Enden von Extruderschnecken 301 dargestellt, die in einem bestimmten Abstand ihrer Mittelachsen zueinander ausgerichtet sein müssen, damit die hier nicht dargestellten, im weiteren Verlauf vorhandenen Schneckenwendel ineinander kämmen. Gegenüberliegend, links oben, sind Wellenenden 201 des Antriebs erkennbar. Diese sind auf der Abtriebsseite eines Verteilergetriebes vorgesehen, durch welches die von einem Motor bereitgestellte Antriebsleistung gleichmäßig auf die beiden Wellen 201 verteilt wird.

Zwischen den Wellenenden 201, 301 sind zwei erfindungsgemäße Sicherheitskupplungen 100 nebeneinander und im demontierten Zustand abgebildet. Jede der Sicherheitskupplungen 100 umfasst zwei Kupplungshalbelemente 10, 20, wobei das antriebsseitige Kupplungshalbelement 10 hinsichtlich seiner hier nicht erkennbaren Innenverzahnung in einer Wellenaufnahmebuchse auf das Verzahnungsprofil eines verzahnten Wellenendes 202 der Antriebswelle 201 abgestimmt ist. Gegenüberliegend ist das Innenprofil in einer Wellenaufnahmebuchse 21 des Kupplungshalbelements 20 auf die Verzahnung 302 an den Enden der Extruderschnecken 301 abgestimmt.

Die Kupplungshalbelemente 10, 20 besitzen jeweils eine zylindrische Hülle 22, die zumindest einen Längenabschnitt der Verzahnung 302, 202 umschließt und die keinen Flansch oder sonstige außen überragende Teile besitzt. Die Hülle 22 umschließt die jeweilige Wellenaufnahmebuchse 21 sowie einen massiv ausgebildeten Bodenbereich. Der Bodenbereich endet an einer Stirnseite 15, welche mehrere Bohrungen 14 aufweist, in die jeweils ein zylindrisches Scherstiftelement 30 einsetzbar ist. Bei dem gezeigten Ausführungsbeispiel sind jeweils vier Bohrungen 14 und Scherstifte 30 je Sicherheitskupplung 100 vorgesehen.

Am Wellenende 302 der Extruderschnecke 301 ist außerdem eine punktuelle Ausnehmung 303 eingebracht. Darin kann ein Zusatzelement eingesetzt werden, das in eine Nut am Innenumfang des Kupplungshalbelements 20 eingreift, sodass eine bestimmte Winkellage bei der Montage vorgegeben ist. Am Wellenende 202 der Antriebswelle 201 ist eine Nut 203 eingebracht, in die ein Zusatzelement 40 eingesetzt wird. Am Innenumfang des Kupplungshalbelements 10 ist eine dazu kompatible Nut vorgesehen, sodass auch hier eine lagerichtige Montage erzwungen wird.

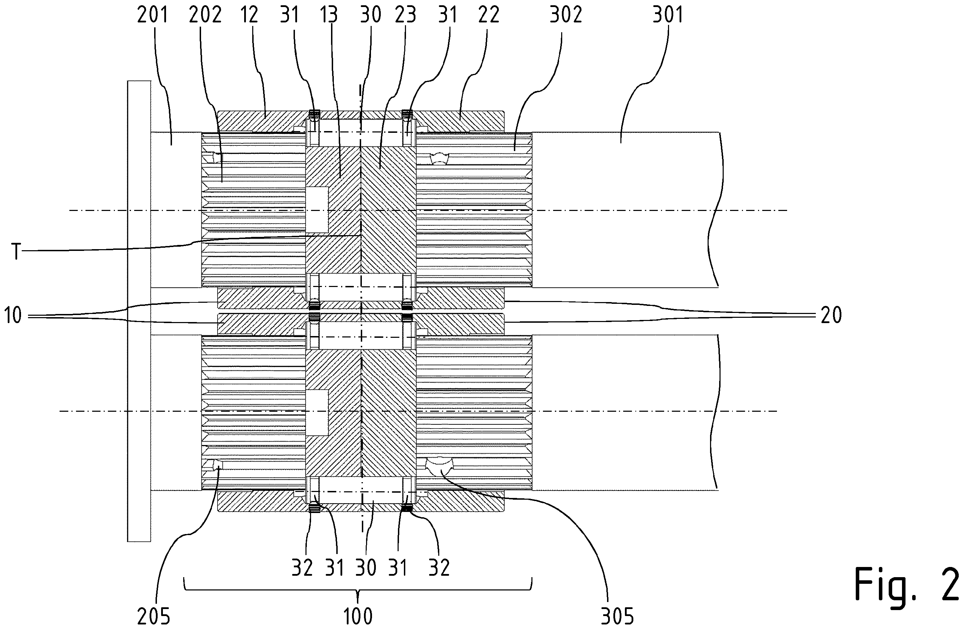

Figur 2 zeigt einen Teilausschnitt des montierten Doppelschneckenextruders mit den beiden nebeneinander, auf gleicher axialer Position liegenden Sicherheitskupplungen 100.

Bei jeder Sicherheitskupplung 100 sind die jeweiligen zylindrischen Hüllen 12, 22 der Kupplungshalbelemente 10, 20 mit gleichem Außendurchmesser ausgebildet, so dass sich ein versatzloser Übergang in einer Trennebene T zwischen den Stirnseiten der Kupplungshalbelemente 10, 20 ergibt. Beide Hüllen 12, 22 nutzen hinsichtlich ihrer Wandstärke den Zwischenraum zwischen den Außendurchmessern der Wellenenden 202, 302 nahezu vollständig aus. Lediglich ein schmaler Spalt verbleibt dazwischen, damit eine gegenseitige Berührung stets ausgeschlossen ist, und zwar auch dann, wenn sich der Außendurchmesser noch etwas erweitern sollte, zum Beispiel durch Wärmedehnung, Anstriche oder anhaftende Schmutzpartikel.

Die Scherstiftelemente 30 sind vollständig innerhalb des Außendurchmessers der jeweiligen Hülle 12, 22 der Kupplungshalbelemente 10, 20 angeordnet. Im dargestellten Ausführungsbeispiel sind sie weit nach außen gerückt, wobei zur Außenseite hin eine ausreichende Wandstärke verbleibt. Die Mittelachsen der Scherstiftelemente 30 liegen bei diesem Ausführungsbeispiel etwa auf Höhe des Außenumfangs des jeweiligen Wellenendes 202, 302. Jedes Scherstiftelement 30 besitzt zudem an seinen beiden Enden eine umlaufende Nut 31. Darin greift ein Gewindestift 32 ein, der von außen in das Kupplungshalbelement 10, 20 eingeschraubt ist.

## Patentansprüche

1. Sicherheitskupplung (100) für einen Doppelschneckenxtruder,
mit wenigstens einem Paar von Kupplungshalbelementen (10, 20), welche jeweils eine Wellenaufnahmebuchse (21) für das Wellenende (202, 301) einer Antriebswelle (201) oder einer Extruderschnecke (301) aufweisen,
und welche über wenigstens zwei Scherelemente (30) miteinander koppelbar sind,
**dadurch gekennzeichnet,**
- **dass** die Kupplungshalbelemente (10, 20) jeweils eine flanschlose, zylindrische Hülle (12, 22) besitzen, die die Wellenaufnahmebuchse (21) umschließt und in einen Bodenbereich (13, 23) übergeht,
- **dass** an einer Stirnseite, die den Bodenbereich (13, 23) abschließt, jeweils wenigstens eine Bohrung (14, 24) je Scherelement (30) vorgesehen ist und
- **dass** die Kupplungshalbelemente (10, 20) mit ihren am jeweiligen Ende des Bodenbereichs (13, 23) gelegenen Stirnseiten (15, 25) voreinander liegen und über die Scherelemente (30)gekoppelt sind, die eine Trennebene (T) zwischen den Stirnseiten (15, 25) überbrücken.

2. Sicherheitskupplung (100) nach Anspruch 1, **dadurch gekennzeichnet, dass** die Scherelemente als zylindrische Scherstiftelemente (30) ausgebildet sind.

3. Sicherheitskupplung (100) nach Anspruch 1 oder 2, **dadurch gekennzeichnet, dass** die Bohrungen (14, 24) für die Scherelemente (30) auf einem gemeinsamem Teilkreis auf den Stirnseiten (15, 25) angeordnet sind.

4. Sicherheitskupplung (100) nach einem der Ansprüche 1 bis 3, **dadurch gekennzeichnet, dass** die Bohrungen (14, 24) für die Scherelemente (30) in gleichmäßiger Winkelteilung auf den Stirnseiten (15, 25) angeordnet sind.

5. Sicherheitskupplung nach wenigstens einem der Ansprüche 1 bis 4, **dadurch gekennzeichnet, dass** die Scherelemente (30) in den Kupplungshalbelementen (10, 20) über Formschlussmittel (31, 32) axial festlegbar sind.

6. Sicherheitskupplung nach Anspruch 5, **dadurch gekennzeichnet, dass** die Scherelemente (30) wenigstens eine Nut (31) aufweisen, in die wenigstens ein von der Außenseite des Kupplungshalbelements (10, 20) eingebrachtes Sicherungselement (32) eingreift.

7. Sicherheitskupplung (100) nach wenigstens einem der vorhergehenden Ansprüche, **dadurch gekennzeichnet, dass** das eine Kupplungshalbelement (10) zusätzlich zu den eingesetzten Scherelementen (30) wenigstens einen Vorsprung aufweist und das andere Kupplungshalbelement (20) einen Rücksprung aufweist, in den der Vorsprung eingreift.

8. Sicherheitskupplung (100) nach Anspruch 7, **dadurch gekennzeichnet, dass** der Vorsprung durch einen Zusatzscherstift gebildet ist, der mit Spiel in den Rücksprung eingreift.

9. Sicherheitskupplung (100) nach Anspruch 8, **dadurch gekennzeichnet, dass** der Zusatzscherstift aus einem Werkstoff gebildet ist, dessen Scherfestigkeit weniger als 80% der Scherfestigkeit der Scherelemente (30) aufweist.

## Claims

1. Safety coupling (100) for a double screw extruder, having at least one pair of coupling half elements (10, 20) which each have a shaft-receiving bushing (21) for the shaft end (202, 301) of a drive shaft (201) or of an extruder screw (301),
and which can be coupled to one another via at least two shearing elements (30),
**characterized**
- **in that** the coupling half elements (10, 20) each have a flangeless, cylindrical casing (12, 22) which surrounds the shaft-receiving bushing (21) and merges into a base region (13, 23),
- **in that** in each case at least one bore (14, 24) per shearing element (30) is provided on an end side which closes the base region (13, 23), and
- **in that** the coupling half elements (10, 20) lie one in front of another with their end sides (15, 25) placed at the respective end of the base region (13, 23), and are coupled via the shearing elements (30) which span a separating plane (T) between the end sides (15, 25).

2. Safety coupling (100) according to Claim 1, **characterized in that** the shearing elements are designed as cylindrical shearing pin elements (30).

3. Safety coupling (100) according to Claim 1 or 2, **characterized in that** the bores (14, 24) for the shearing elements (30) are arranged on a common pitch circle on the end sides (15, 25).

4. Safety coupling (100) according to one of Claims 1 to 3, **characterized in that** the bores (14, 24) for the shearing elements (30) are arranged at a uniform angular division on the end sides (15, 25).

5. Safety coupling according to at least one of Claims 1 to 4, **characterized in that** the shearing elements (30) can be secured axially in the coupling half elements (10, 20) via form-fitting means (31, 32).

6. Safety coupling according to Claim 5, **characterized in that** the shearing elements (30) have at least one groove (31) in which at least one securing element (32) introduced from the outer side of the coupling half element (10, 20) engages.

7. Safety coupling (100) according to at least one of the preceding claims, **characterized in that** the one coupling half element (10), in addition to the inserted shearing elements (30), has at least one protrusion and the other coupling half element (20) has a recess in which the protrusion engages.

8. Safety coupling (100) according to Claim 7, **characterized in that** the protrusion is formed by an additional shearing pin which engages with play in the recess.

9. Safety coupling (100) according to Claim 8, **characterized in that** the additional shearing pin is formed from a material, the shearing strength of which comprises less than 80% of the shearing strength of the shearing elements (30).

## Revendications

1. Accouplement de sécurité (100) pour une extrudeuse à double vis,
comprenant au moins une paire de demi-éléments d'accouplement (10, 20) qui présentent respectivement une douille de logement d'arbre (21) pour l'extrémité d'arbre (202, 301) d'un arbre d'entraînement (201) ou d'une vis d'extrudeuse (301),
et qui peuvent être accouplés l'un à l'autre par au moins deux éléments de cisaillement (30),
**caractérisé**
- **en ce que** les demi-éléments d'accouplement (10, 20) possèdent respectivement une enveloppe cylindrique (12, 22) sans bride qui entoure la douille de logement d'arbre (21) et se confond avec une zone de fond (13, 23) ,
- **en ce que** sur une face frontale qui termine la zone de fond (13, 23), respectivement au moins un perçage (14, 24) est prévu pour chaque élément de cisaillement (30), et
- **en ce que** les demi-éléments d'accouplement (10, 20) se trouvent l'un devant l'autre avec leurs faces frontales (15, 25) situées à l'extrémité respective de la zone de fond (13, 23) et sont accouplés par l'intermédiaire des éléments de cisaillement (30) qui couvrent un plan de séparation (T) entre les faces frontales (15, 25).

2. Accouplement de sécurité (100) selon la revendication 1, **caractérisé en ce que** les éléments de cisaillement sont réalisés sous la forme d'éléments de goupille de cisaillement cylindriques (30).

3. Accouplement de sécurité (100) selon la revendication 1 ou 2, **caractérisé en ce que** les perçages (14, 24) pour les éléments de cisaillement (30) sont disposés sur un cercle primitif commun sur les faces frontales (15, 25).

4. Accouplement de sécurité (100) selon l'une quelconque des revendications 1 à 3, **caractérisé en ce que** les perçages (14, 24) pour les éléments de cisaillement (30) sont disposés sur les faces frontales (15, 25) avec un pas angulaire régulier.

5. Accouplement de sécurité selon au moins l'une des revendications 1 à 4, **caractérisé en ce que** les éléments de cisaillement (30) peuvent être immobilisés axialement dans les demi-éléments d'accouplement (10, 20) par l'intermédiaire de moyens à complémentarité de forme (31, 32).

6. Accouplement de sécurité selon la revendication 5, **caractérisé en ce que** les éléments de cisaillement (30) présentent au moins une rainure (31) dans laquelle s'enclenche au moins un élément de sécurité (32) introduit depuis la face extérieure du demi-élément d'accouplement (10, 20).

7. Accouplement de sécurité (100) selon au moins l'une des revendications précédentes, **caractérisé en ce que** ledit un demi-élément d'accouplement (10) présente en plus des éléments de cisaillement (30) mis en œuvre au moins une saillie, et l'autre demi-élément d'accouplement (20) présente un creux dans lequel s'enclenche la saillie.

8. Accouplement de sécurité (100) selon la revendication 7, **caractérisé en ce que** la saillie est formée par une goupille de cisaillement supplémentaire qui s'enclenche dans le creux avec du jeu.

9. Accouplement de sécurité (100) selon la revendication 8, **caractérisé en ce que** la goupille de cisaillement supplémentaire est formée à partir d'un matériau dont la résistance au cisaillement est inférieure à 80 % de la résistance au cisaillement des éléments de cisaillement (30).
